(19) Europäisches Patentamt
European Patent Office
Office européen des brevets

(11) **EP 2 395 829 B1**

(12) **EUROPÄISCHE PATENTSCHRIFT**

(45) Veröffentlichungstag und Bekanntmachung des Hinweises auf die Patenterteilung:
**09.11.2016 Patentblatt 2016/45**

(51) Int Cl.:
*A01G 7/02* (2006.01)    *A01G 9/18* (2006.01)

(21) Anmeldenummer: **10708896.5**

(22) Anmeldetag: **08.02.2010**

(86) Internationale Anmeldenummer:
**PCT/EP2010/000763**

(87) Internationale Veröffentlichungsnummer:
**WO 2010/089144 (12.08.2010 Gazette 2010/32)**

(54) **VERFAHREN UND EINRICHTUNG ZUR BIOMASSEGESTÜTZTEN ABGAS-,INSBESONDERE CO2-ENTSORGUNG**

METHOD AND DEVICE FOR PHOTOSYNTHESIS-SUPPORTED EXHAUST GAS DISPOSAL, PARTICULARLY CO2

PROCEDE ET DISPOSITF POUR L'ELIMINATION PAR PHOTOSYNTHESE DES GAZ D'ECHAPPEMENT NOTAMMENT DE CO2

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **09.02.2009 DE 102009008093**
**16.07.2009 DE 102009033573**

(43) Veröffentlichungstag der Anmeldung:
**21.12.2011 Patentblatt 2011/51**

(73) Patentinhaber: **Rogmans, Maria**
**47546 Kalkar (DE)**

(72) Erfinder: **WILHELM, Hermann-Josef**
**47546 Kalkar (DE)**

(74) Vertreter: **Schmidt, Karl Michael**
**Buchenweg 65**
**47447 Moers (DE)**

(56) Entgegenhaltungen:
WO-A1-2008/099252    WO-A2-2005/123237
WO-A2-2010/043323    AT-B- 390 053
GB-A- 2 460 495

**Beschreibung**

Die Erfindung betrifft ein Verfahren, sowie eine Einrichtung zur biomassegestützten Abgas-, insbesondere $CO_2$-Entsorgung, gemäß Oberbegriff der Patentansprüche 1 und 10.

Im globalen Maßstab sollen mit so genannten Emissionsrechten $CO_2$-starke Emitenten verpflichtet werden, um eine Limitierung der Emission zu erreichen, und/oder andernorts wirksame $CO_2$-Senken oder Absorber für die biologische oder technologische Absorption von $CO_2$ zu vergüten. Im globalen Maßstab erhofft man sich daraus eine zumindest teilweise Kompensation von $CO_2$.

Bei dieser Betrachtung wird eine im globalen Maßstab erfasste Emissionsquelle, bspw ein Kohlekraftwerk hinsichtlich der Klimarichtlinie von einer Energieerzeugungsquelle bspw einem Windkraftwerk oder einem Biomassekraftwerk gegenkompensiert, welches $CO_2$-neutrale Energie erzeugt. In Summe soll dann der Anteil des erzeugten Stromes bis 2020 zu 25 % aus regenerativer Energie gebildet werden.

Mit anderen Worten heisst dies, dass an einem Ort der Welt $CO_2$ produziert wird und von der Atmosphäre transportiert werden muss, damit dies andernorts wieder regeneriert, d.h. durch Biomasse wieder verstoffwechselt werden kann. In globaler theoretischer Summe betrachtet ist dies richtig. Dennoch wird bei genauerer Betrachtung klar, dass die Atmosphäre das emittierte $CO_2$ transportieren muss. Die Atmosphäre wird also auch bei dieser kompensierten $CO_2$-Betrachtung belastet, d.h. zumindest für den Transport. Schon dies führt aber zu negativen Klimaeffekten. Es sind Verfahren und Einrichtungen zur Einleitung von $CO_2$-haltigem Gas als Dünger in ein Pflanzenanbaufeld bekannt.

Dabei ist gezeigt worden, dass $CO_2$ durch Bodeneinleitung eine den Pflanzenwuchs enorm steigernde Wirkung hat. Auch die Luftdüngung in Gewächshäusern mit $CO_2$ oder $CO_2$-haltigem Gas ist bekannt, und hat die genannte wuchsfördernde Wirkung. Aus der AT 390 053 B sowie aus der WO 2005/123237 A2 und der WO 2008/099252 A1 sind Gewächshäuser bekannt, in denen Biomasse auch zur Verstoffwechselung CO2 herangezogen werden. Die dort kultivierte Biomasse besteht dabei aber zumeist aus Landpflanzen.

Ein weiterer Aspekt, ist dass die Düngemittelpreise tendenziell deutlich steigen. In Bezug auf den Anbau von Biomasse zur Energieerzeugung führen die steigenden Düngemittelpreise zu entsprechenden Kostensteigerungen, die den sogenannten Energieanbau von Biomassepflanzen verteuert.

Weiterhin ist aus der WO/2007/012313 ein Gewächshaus bekannt, in welchem mehrere Etagen vorgesehen sind. Dabei ist dort vorgeschlagen, dass in unteren Etagen sogenannte Anzuchtflächen vorgesehen sind, auf welchen Jungpflanzen angesetzt werden. Später erfolgt dann eine Umschichtung der angewachsenen Jungpflanzen auf höheren Etagen. In Bezug auf die Anzucht neuer Pflanzen mag dies vorteilhaft sein, aber für andere Anwendung ist dies ungeeignet, weil die Umbettung oder Umsetzung der Etagen einen hohen funktionellen aber auch energetischen Aufwand erfordert.

Solche bekannten Konzepte sind auf optimierte Wachstumsbedingungen in einem Gewächshaus appliziert. Dabei sind die einzelnen Vorgehensweisen aber unbrauchbar, wenn es darum geht im Endeffekt eine optimierte $CO_2$-Eliminierung zu erreichen.

Daher besteht ein Bedarf in der Konstruktion von Einrichtungen und dem Entwickeln von Verfahren, bei welchen die $CO_2$-verstoffwechselnde Biomasse möglichst effizient in einer zentralen Einrichtung dem aufgesammelten $CO_2$-haltigen Abgas zugeführt werden kann, oder umgekehrt. Dabei ist die Zielvorgabe zum einen eine hohe wirksame Energiemenge an Sonnenlicht einzufangen, welches die Photosynthese anschiebt, und andererseits aber auch große stoffwechselaktive Biomassemengen in teilweise oder ganz abgeschlossenen Systemen bergen zu können. Dies verlangt spezifische Gewächshauskonstruktionen, die speziell auf diesen Zweck hin konzipiert sein müssen.

Der Erfindung liegt somit die Aufgabe zugrunde, ein Verfahren sowie eine Einrichtung dahingehend weiter zu entwickeln, dass die Menge an Biomasse maximiert und dadurch auch die Menge des verstoffwechselbaren $CO_2$ maximiert werden kann.

Die gestellte Aufgabe ist bei einem Verfahren der gattungsgemäßen Art erfindungsgemäß durch die kennzeichnenden Merkmale des Patentanspruches 1 gelöst.

Weitere vorteilhafte Ausgestaltungen des Verfahrens sind in den abhängigen Ansprüchen 2 bis 9 angegeben.

Im Hinblick auf eine Einrichtung der gattungsgemäßen Art ist die Aufgabe erfindungsgemäß durch die Merkmale des Anspruches 10 gelöst.

Weitere vorteilhafte Ausgestaltungen der Einrichtung sind in den übrigen abhängigen Ansprüchen angegeben.

Kern der verfahrensgemäßen Erfindung ist hierbei, in einem Großgewächshaus für Biomasse eine Einrichtung zur Erzeugung von Energie oder Energieträgern und/oder eine chemische Produktionseinrichtung zu integrieren, derart, dass die Energie- oder Energieträger-Erzeugungseinrichtung und/oder die chemische Produktionseinrichtung die im Gewächshaus erzeugte Biomasse und die in der Einrichtung erzeugte $CO_2$-Menge und/oder die anfallende Wärmemenge in einem zumindest teilweise geschlossenen Kreislauf im Gewächshaus verbleibt.

Mit anderen Worten resultiert dies in eine von einem Gewächshaus umgebene somit praktisch eingehauste Bioethanolanlage und/oder eine chemische Produktionsanlage etc. Thermische Energie wird dabei NICHT vergeudet und ungenutzt an die Umwelt abgegeben. Energie- und Masseströme werden durch die logistische Nähe von einzutragender Biomasse optimiert.

In Summe entsteht ein geschlossener Energie- und Massetrom-Haushalt.

Es wird eine maximierte zusammengehaltene Energiedichte sowohl thermisch als auch optisch optimiert erreicht. Dadurch wird eine direkte Kausalität zu optimierten Massenströmen von Biomasse erreicht. Daraus resultiert wiederum ein maximierter optimierter Output an Energie, Energieträgern und chemischen Substraten oder Produkten, bei gleichzeitiger $CO_2$-Neutralität des Prozesses.

In verfahrensgemäßer Ausgestaltung ist angegeben, dass innerhalb des Gewächshauses, welches hochbauend ausgestaltet ist, ein statisches turmförmiges Zentralelement angeordnet ist, durch welches das Gewächshaus nicht nur statisch belastbarer wird, sondern innerhalb des Gewächshauses eine selbsttätige durch Thermik betriebene Luftumwälzung stattfindet.

Weiterhin ist ausgestaltet, dass die Abwärme der innerhalb des Zentralementes integrierten Produktionseinrichtung (Bioethanol-, Biogas, Stromerzeugung, etc) mit in den Aufwind innerhalb des Zentralelementes eingespeist wird. Damit addiert sich dieser Aufwindbeitrag zu dem der schon alleine durch den barometrischen Höhenunterschied entsteht.

In weiterer vorteilhafter Ausgestaltung ist angegeben, dass die Produktionseinrichtung eine Biogaserzeugungsanlage ist, bei welcher das gesamte Biogas unter Druck im Wasser eingesprudelt wird, so dass sich das $CO_2$ in Wasser löst und zur $CO_2$-Düngung der Biomasse rückgeführt wird, und das so im Methangehalt aufkonzentrierte Biogas als Energieträger abgezogen wird.

Um eine optimale Nutzung des Gewächshauses unter dem Aspekt der Optimierung des Biomasseertrages sowie auch der Optimierung der $CO_2$-Bindung zu erreichen ist vorteilhaft ausgestaltet, dass das Gewächshaus in lichtschwache und lichtstarke Sektionen eingeteilt wird, und dass eine sektionsweise unterschiedliche Kunstlichtausleuchtung des Gewächshauses vorgenommen wird, derart, dass nur in ausgesuchten Sektionen Kunstlichtbetrieb und/oder Tag-Nacht-gesteuerter Kunstlichtbetrieb vorgenommen wird.

Weiterhin ist ausgestaltet, dass dem Gewächshaus außerhalb liegend oder stehend geschlossene, aber temporär offenbare Behältnisse aus lichtdurchlässigem Wandmaterial beigeordnet sind, in welchen Biomasse eingebracht wird, und über einen $CO_2$-Anschluss, sowie einen Warmluft-/Warmwasseranschluß von außen $CO_2$ und Wärme oder Abwärme zugeführt wird, und dass die Behältnisse zeitweise zur Erntung der Biomasse geöffnet und/oder insgesamt abtransportiert werden.

Bei den Einsprudelungen von CO2 in Wasser können Konzentrationen von 0,03 bis 3 gramm $CO_2$ pro Liter eingesetzt werden. Der Oberwert von 3 gramm pro liter kann ggfs in der Zukunft noch durch Neuzüchtungen überschritten werden.

Erfindungsgemäß ist das Gewächshaus hochbauend, und mit einem statischen Zentralelement versehen, über welches eine etagenweise Anordnung der Pflanzungsetagen statisch ausgesteift ist, wobei der innere Hohlraum dieses als Säule ausgebildeten statischen Zentralelementes zur Aufnahme eines Bioethanolwerkes und/oder eines Biogaswerkes und/oder einer Biogasaufmethanisierungs-einrichtung und/oder eines Pelletierwerkes etc dient. Es ist auch denkbar eine Ölmühle zur mechanischen und/oder chemischen Gewinnung von Fettsäuren und/oder Ölen aus Biomasse zu integrieren.

In weiterer vorteilhafter Ausgestaltung ist angegeben, dass die anfallende Abwärme der in das statische Zentralelement integrierten Anlage über Rohrleitungssysteme mit in das Gewächshaus einspeisbar ist, insbesondere zum Beheizen, der lichtärmeren inneren Zone des Gewächshauses.

Bei sämtlichen oben beschriebenen Anlagen fällt Abwärme an, die ansonsten ungenutzt in die Umwelt gelangt. Zuweilen werden bei bekannten Gewächshäusern auch Wärmenachverstromungen vorgenommen. Hierbei ist jedoch zu beachten, dass die Nachverstromung von Niedertemperaturwärme einen Wirkungsgrad von typisch unter 10 % aufweist.

Schon von diesem Standpunkt her ist die direkte Wärmenutzung im Gewächshaus, in ansonsten fremd zu beheizenden Zonen, oder zum Ganzjahresbetrieb, besonders deshalb so effizient, weil damit nicht gesondert geheizt werden muss. Damit steigt der Gesamtwirkungsgrad der gesamten Einrichtung in Bezug auf die bspw ganzjährige Jahreszeitenunabhängige Erzeugung von Biomasse.

Dass das statische Zentralelement sowie das Gewächshaus hochbauend ist hat die Wirkung, dass sowohl innerhalb des rohrförmigen Zentralelementes als auch an seiner Außenoberfläche, die innerhalb des Gewächshauses liegt, ein durch sowohl den barometrischen Höhenunterschied als auch durch die Zuführung thermischer Abwärmeenergie im Bodenbereich Aufwind erzeugt wird, der zu einer thermischen Durchmischung der $CO_2$-reichen zugeführten Abluft der im Zentralement integrierten Anlage im Gewächshaus dient.

In weiterer vorteilhafter Ausgestaltung ist angegeben, dass oben im Gewächshaus, oder im Zentralelement im oberen Bereich Mittel zur Erzeugung elektrischer Energie aus Aufwind integriert sind, und dass über diesen Aufwindgenerator elektrische Energie erzeugt wird, zum Betrieb einer nächtliche LED-Beleuchtung, zur Maximierung der Photosynthesetätigkeit der Biomasse auch in Nachstunden, und/oder lichtarmen Tageszeiten.

Weiterhin ist vorteilhaft ausgestaltet, dass die Etagen im Gewächshaus mit flachen Wasserwannen ausgestattet sind, in denen starkwüchsige Biomassenpflanzen in Form von Wasser- oder Schwimmpflanzen angeordnet sind, und dass die Wannen in einem nach oben gebauten Gestell mit lichteinfallsbezogenen Zwischenräumen platziert sind, und dass die Statik dieses Gestells zusätzlich zu vertikalen Trägern auch horizontal durch Querverbinder am Zentralelement befestigt und statisch so abgefangen sind.

In weiterer Ausgestaltung ist angegeben, dass zumindest die dunkleren Innenbereichen mit Kunstlicht /LEDs beleuchtet werden, die vorzugsweise im Blitzbetrieb betreibbar sind. Bekanntermaßen genügt zur Aufrechterhaltung der Photosynthese auch der gepulste Blitzbetrieb, statt Dauerbetrieb der Beleuchtung.

In besonders vorteilhafter Ausgestaltung ist angegeben, dass zumindest ein Teil der oberen lichtdurchlässigen Außenfassade mit optisch teildurchlässigen photovoltaischen Elementen versehen ist, derart, dass zumindest ein Teil der für die Photosynthese notwendigen Wellenlängenbereiche des Sonnenlichtes durchgelassen werden, während ein weiterer Teil des Sonnenlichtes in den photovoltaischen Zellen in Strom umgewandelt wird. So wird nicht nur elektrische Energie erzeugt, sondern die Spitze des Gewächshochhauses wird tags vor Überhitzung und nachts vor Frost gesichert.

In weiterer Ausgestaltung ist angegeben, dass das Gewächshaus pyramidal ausgestaltet ist, und das Zentralelement im Zentrum angeordnet ist und bis unter die Spitze der Pyramide oder bis kurz davor reicht.

In weiterer vorteilhafter Ausgestaltung ist angegeben, dass das Gewächshaus als Großgewächshaus angelegt ist.

In Bezug auf die vorteilhaft verwendeten Pflanzen die eine extrem starkwüchsige Biomasse unter erhöhter $CO_2$ Zufuhr darstellen geben die Verwendungsansprüche eine Liste von Pflanzen wieder.

Weiterhin ist es von Vorteil, dass in das Gewächshaus das Abwasser einer Abwasser- oder Brauchwasserleitung, oder das Abwasser einer Abwasserkläranlage eingespeist wird, derart, dass das Abwasser entweder in die Bodenwanne, oder direkt in die Pflanzwannen des Gewächshauses eingeleitet werden.

Hierdurch findet zum einen eine Verwertung der Abfallstoffe im Wasser als Düngestoff für die Biomasse statt. Zum anderen wird das Wasser als Quasi Vorreinigungstufe einer Wasseraufbereitung so vorbehandelt.

In vorteilhafter Ausgestaltung ist angegeben, dass die Biomasse nach Verstoffwechselung der Inhaltsstoffe aus dem Abwasser ein vorgereinigtes Wasser zurückgelassen, welches entweder innerhalb des Gewächshauses oder außerhalb desselben einer Trinkwasseraufbereitung bis zur Erreichung von Trinkwasserqualität zugeführt wird und dort in üblicher Weise nachbehandelt wird.

Weiterhin ist besonders vorteilhaft ausgestaltet, dass arzneimittelbelastete Abwässer eingeleitet werden, welche durch pflanzliche Verstoffwechselung im so vorgereinigten Wasser abgebaut werden. Eine reine chemische oder physikalische Reinigung von Abwässern die Arzneimittelbelastet sind, ist nur unzureichend. Hier wird ein biologischer Abbau im Rahmen des erfindungsgemäßen Verfahrens und der erfindungsgemäßen Einrichtung vorgenommen.

In weiterer vorteilhafter Ausgestaltung ist angegeben, dass das Schmutzwasser zur Vorklärung in die Bodenwanne oder die Pflanzwannen oder -rinnen eingeleitet und danach die Weiterleitung des vorgereinigten Wassers in die Pflanzwannen oder Pflanzrinnen erfolgt.

In weiterer vorteilhafter Ausgestaltung ist angegeben, dass bei Einleitung des Abwassers in die Bodenwanne (14) des Gewächshauses dort in der Bodenwanne eine Biogaserzeugungsanlage integriert ist, derart, dass dort ein Gärbrei aus im Gewächshaus erzeugter, oder extern erzeugter Biomasse vorhanden ist, dem das Abwasser mit seiner Verschmutzungslast, oder mit Klärschlamm gesteuert zugeführt wird.

In weiterer vorteilhafter Ausgestaltung ist angegeben, dass das in der Bodenwanne erzeugte Biogas abgezogen und verwertet, oder aufmethanisiert wird.

In weiterer vorteilhafter Ausgestaltung ist angegeben, dass das Biogas innerhalb des Gewächshauses aufmethanisiert wird, und das dabei entstehende Kohlendioxid-Gas als CO2-Dünger der Biomasse rückgeführt wird, während das aufmethanisierte Gas aus dem Gewächshaus zur externen Nutzung oder Einspeisung ausgeleitet wird.

In weiterer vorteilhafter Ausgestaltung ist angegeben, dass die in der Bodenwanne abgesetzten Sedimente systemintern, d.h. innerhalb des Gewächshauses entnommen und getrocknet und energetisch durch Verbrennung verwertet wird, wobei die dabei entstehenden kohlendioxidreichen Abgase wieder systemintern, d.h. innerhalb des Gewächshauses der Biomasse als CO2-Dünger zugeführt wird.

Kern der einrichtungsgemäßen Erfindung ist, dass an das Wassersystem des Gewächshauses eine Abwasser- oder Brauchwasserleitung angeschlossen ist, an die Abwasserleitung einer Abwasserkläranlage angeschlossen ist, derart, dass das Abwasser entweder in die Bodenwanne 14, oder direkt in die Pflanzwannen des Gewächshauses eingeleitet bzw angeschlossen ist.

In weiterer vorteilhafter Ausgestaltung ist angegeben, dass die Bodenwanne am Boden oder im Keller des Gewächshauses eine Biogaserzeugungsanlage ist, bei welchem der Gärbrei aus Biomasse und/oder der Schmutzlast von eingespeistem Abwasser besteht.

Weiterhin ist ausgestaltet, dass die Bodenwanne im unteren Teil den absinkenden Klärschlamm oder Sedimente enthält, und der darüber sich bildende Gasdom mit einem Deckel oder einer Folie abschließt, aus dem das Biogas entnehmbar und dem Gewächshaus, insbesondere durch das statische turmförmige Zentralelement (15) und einer dort angeordneten Aufmethanisierungs= oder Energieerzeugungseinrichtung zuführbar ist.

In weiterer vorteilhafter Ausgestaltung ist angegeben, dass das angeschlossene Abwassersystem über ein Leitungssystem mit den Pflanzwannen oder Pflanzrinnen verbunden ist.

In weiterer vorteilhafter Ausgestaltung ist angegeben, dass die Biommasse zumindest abwechselnd zwischen Licht und Schattenbereich zu Erreichung der zum Wachstum notwendiger Lichtsummen und/oder zum Gasaustausch bewegbar ist.

In weiterer vorteilhafter Ausgestaltung ist angegeben, dass das Gewächshaus mit einem Gebäude funktional derart kombiniert ist, dass die Abgase von Klimaanlagen und/oder Energieerzeugungsanlagen des Gebäudes zur Verstoffwechselung des CO2 in das Gewächshaus leitbar sind, und dass das im Gewächshaus entstehende sauerstoffreiche Luft in das Gebäude zurückleitbar ist, und/oder dass die Abwässer des Gebäudes zur Verstoffwechselung in das Gewächshaus eingeleitbar sind.

In weiterer vorteilhafter Ausgestaltung ist angegeben, dass das Gewächshaus mit einer aus dem Gewächshaus herausgeführten Pipeline oder Fördereinrichtung verbunden ist, über welche die im Gewächshaus erzeugte Biomasse mittels Wasser, oder Luft oder Förderbändern aus dem Gewächshaus heraustransportierbar ist.

Besonders vorteilhaft ist auch der Einsatz einer Methangespeisten Brennstoffzelle, die direkt aus Biogas, oder aufmethanisiertem Biogas Strom erzeugen kann.

Auch das spezielle Arrangement mehrerer Gewächshaus um einen Innenhof ermöglicht die Zufuhr großer zusätzlicher Mengen Lichtenergie durch Tageslicht.

Ausgestaltungen der Erfindung sind in der Zeichnung dargestellt.

Es zeigt:

Figur 1: Prinzipieller Aufbau eines pyramidalen Gewächshauses mit Stellagen

Figur 2: Prinzip selbsttätige Wärme- und CO$_2$-Umwälzung

Figur 3: Darstellung qualitativer konstruktiver Parameter des Aufwindturmes.

Figur 4: Perspektivische Darstellung mit zentrierter Positionierung des Aufwindturmes

Figur 5: Darstellung einer Ausgestaltung mit extern erweiterbarer Biomasseproduktionskapazität

Figur 6: Prinzip-Darstellung mit Einbindung eines Abwassersystems

Figur 7: Arrangement mehrerer Gewächshäuser

Prinzipiell wird bei dieser Erfindung eine erfindungsgemäße Gewächshausgestaltung mit einem geschlossenen CO$_2$-Zyklus, einem Biomassezyklus, einem geschlossenen Wärmezyklus mit einer Energie- oder Energieträgererzeugungeinrichtung kombiniert. Entstehendes CO$_2$ wird entweder als Abgas wuchsfördernd direkt zugegeben, oder das Abgas wird druckgeladen in Wasser aufgesprudelt und im zirkulierenden Wasser innerhalb des Gewächshauses zur Wässerung der Pflanzen transportiert.

Dabei entgast das Wasser dann stetig wieder CO$_2$ in der Nähe der Pflanzen.

Grundsätzlich gilt auch für das oben Gesagte, dass bei druckaufgeladener Einleitung von CO$_2$ in Wasser also im wesentlichen in H$_2$O gelöste Kohlensäure, d.h. H$_2$CO$_3$ in Wasser entsteht. So wird das CO$_2$ bei der genannten Einleitung in Wasser unter Druck zu dieser genannten gelösten Kohlensäure.
Erfindungsgemäß wird zur Herstellung von kohlesäurereichem Wasser das Kohlendioxid aus ABGASEN verwendet, um damit dann die Düngung der Biomasse vorzunehmen.

Bei der Verwendung von Wasserlinsen aber auch der sogenannten Wasserhexe wird regelmäßig geerntet. Die Erntung erfolgt durch Kippung der Wannen und ein Abschütten nach unten.
Bei Wasserlinsen sind dies alle 5 bis 14 Tage. Weiterhin vorteilhaft verwendbare Pflanzen sind weiter unter noch durch ihr botanisches Taxon klassifiziert und aufgelistet.

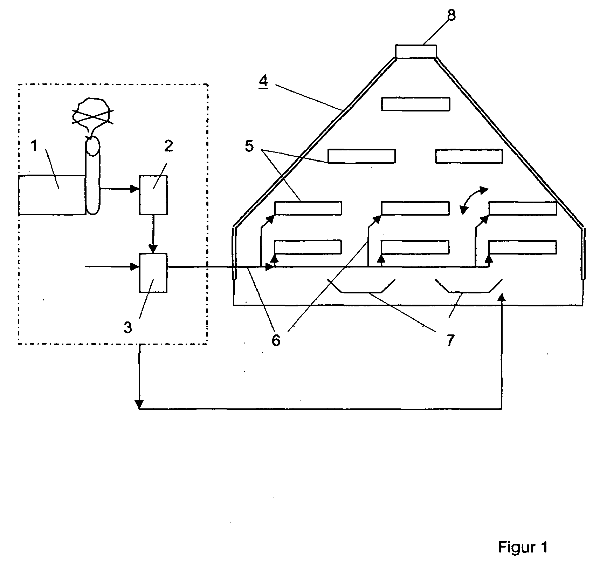

Figur 1 zeigt ein erstes prinzipielles Ausgestaltungsbeispiel. Die Abgase einer Abgas-, bzw Industrieanlage 1 werden nicht durch den Schornstein geschickt, sondern zunächst durch einen Gaswäscher 2. Sodann wird das CO$_2$-haltige Abgas in einen Druckspeicher 3 gegeben, bei dem unter Druck, von etwa 1 bis 10 Bar Wasser mit zugegeben wird, so dass sich Kohlensäure in Wasser bildet. Dabei wird der Anteil CO$_2$ von 0,05 bis 0,5 Gramm pro Liter Wasser eingestellt, weil diese Wertespanne optimal düngt und gleichzeitig eine Übersäuerung der Biomasse ausschließt.
Sodann wird das aus Abgas gewonnene kohlensäurehaltige Wasser über ein Rohrleitungssystem 6 in die besagten Wannen 5 geleitet. Dabei wird der Füllstand so kontrolliert, dass immer nur soviel Wasser nachgeführt wird, wie verbraucht wird, verdampft und ggfs von der Pflanze verstoffwechselt wird. Die Wannen sind dabei in einem teilangeschlossenen System angeordnet, welches aus einer lichtdurchlässigen Wandung 4 besteht. Dieses System ist dabei wie hier bspw pyramidal ausgestaltet, so dass eine optimale lichteinwirkende Oberfläche für die besagte Photosynthese entsteht. Gleichzeitig wird auch noch kohlensäurehaltiges Wasser innerhalb dieses System entspannt, so dass Kohlensäure wieder als CO$_2$ ausgast (weil diese Vorgang reversibel ist) und innerhalb dieses mit Biomasse gefüllten Raumes auch zusätzlich CO$_2$ Luftdünger angeboten wird. Die Wannen 5 sind hierbei bspw kippbar, so dass wenn-diese Oberfläche bspw mit Wasserlinsen sich schlüssig gebildet hat, dieselben durch Kippung teilweise abgeschüttet werden. Hierzu ist im Boden der Wannen 5 jeweils ein Lichtsensor angeordnet, der dann nahezu vollständig abgedunkelt wird, wenn die Oberfläche vollständig zugewachsen ist und geerntet werden muss.

Unten ist eine Fördereinrichtung, so dass die abgeschütteten Wasserlinsen automatisch gesammelt und zur Weiterverabreitung herausgefördert werden können.
Oben am pyramidalen Körper, der das teilabgeschlossene System darstellt, ist eine Ablassklappe 8 oder ein Ablassventil angeordnet, damit überschüssiges Gas, d.h. auch durch Photosynthese gebildeter Sauerstoff oben abgeführt werden kann.

Nun wird die abgaserzeugende und die Biomasse wieder nutzende Produktionsanlage (in gestrichelter Umrahmung) in das Gewächshaus integriert. Die bauliche Integration erfolgt dabei aber nunmehr mit dem statisch austeifenden Zentralelement. Hierzu zeigt die nächste Figur unter anderem die Integration der besagten Produktionseinrichtung direkt in das turmförmige Zentralement des Gewächshauses. Dabei findet eine Ankopplung an einen geschlossenen Wärme-, $CO_2$-, Stoff(Biomasse)-kreislauf statt, der die minimalsten Transportwege erzeugt, und außerdem auch eine durch gemeinsamen Wärmekreislauf zwischen Produktionsanlage und Gewächshaus bewirkte enorme Energieeffizienz herbeiführt. Somit verwertet die integrierte Produktionsanlage die erzeugte Biomasse direkt an Ort und Stelle, wobei Abfälle wieder rückgedüngt und vor allem das erzeugte $CO_2$ wieder zurückgeführt wird. In einer Ausführung kann damit eine sich selbst antreibende aus Sonnenlicht gespeiste Energieerzeugungseinrichtung entstehen, die von der Biomasseerzeugung und Erntung bis hin zur Stromgewinnung völlig $CO_2$-neutral ist.

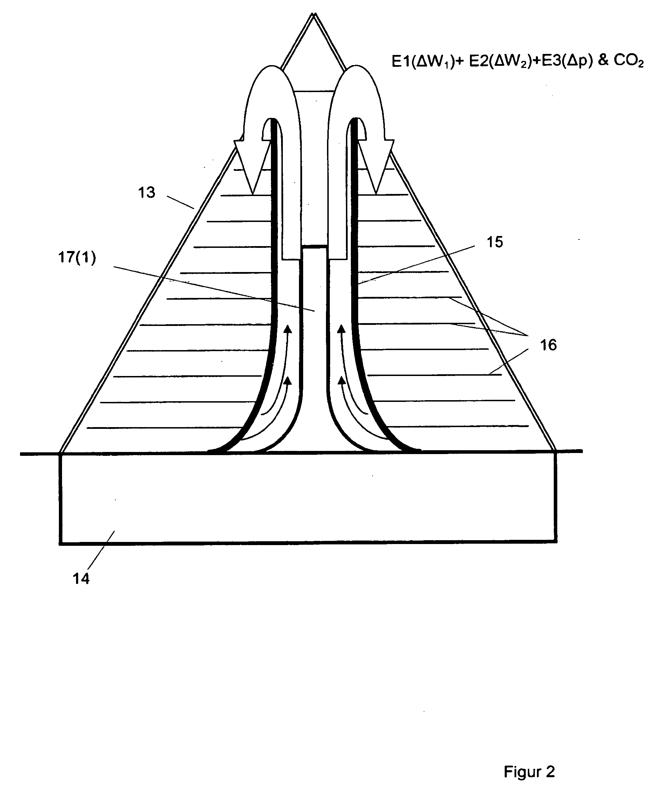

Figur 2 macht die integrative Lösung deutlicher, in Bezug auf das sowohl statische Zentralement 15, welches gleichzeitig eine Produktionsanlage 1, 17 zur Verwertung der erzeugten Biomasse integrativ enthält, als auch die passive Wärme- und $CO_2$-Umpumpungswirkung durch den erzeugten Aufwind.

Die Energiebeiträge zum Aufwind sind:

1. $E(\Delta P_{bar})$: Energie aus Druckunterschied durch barometrischen Höhenunterschied,
2. $E(\Delta W)$: Energie aus Abwärme aus der Produktionsanlage im Turm,
3. $E(\Delta P_{therm})$: Energie aus Druckunterschied aus dem Druck kalter komprimierter Luft am Boden aus dem kühlen Inneren des Gewächshausturms UND

dem Druck der expandierten heissen Luft an der Spitze des Gewächshauses.

So dass sich die Gesamtenergie im Aufwind ergibt zu

$$E_{ges} = E(\Delta P_{bar}) + E(\Delta W) + E(\Delta P_{therm})$$

Mit dem Aufwind mitgerissen wird das $CO_2$, das von der im turmförmigen Zentralement integrierten Produktionsanlage emittiert wird. Dieses wird mit in die dadurch bewirkte gesamte Umwälzung von Luft integriert. Der dadurch höhere Gehalt an $CO_2$ wirkt in der eingangs beschriebenen Weise extrem wuchsfördernd auf die Biomasse.

Gleichzeitig erfolgt bei dieser Konzeption gegenüber bekannten Konzeptionen keine Aufkonzentrierung von $CO_2$ am Standort einer solchen Einrichtung, weil hier nicht mehr $CO_2$ ins Gewächshaus eingeleitet wird, als eine Produktionsanlage ansonsten ohne das erfindungsgemäße Gewächshaus ohnehin an diesem Standort in die Umgebung einbringen würde. Die Produktionsanlage wird $CO_2$-mäßig also fortwährend entschadet. Dies neben dem enormen Effekt der Zusammenlegung des Wärmekreislaufes zwischen Produktionsanlage und Gewächshaus.

Hierbei sind aber physikalische Gegebenheiten zu berücksichtigen. Interessanterweise ergibt sich aber daraus eine reproduzierbare Anweisung zur konstruktiven Dimensionierung des Aufwindturms in Form des zugleich statisch genutzten Zentralelementes.

Dabei handelt es sich um relative konstruktive Zusammenhänge, d.h. Höhe des Turms in Bezug auf seinen Durchmesser, sowie der Durchmesser insbesondere der Austrittsöffnung 19 des Turms 15 oben in Bezug auf die verbleibende umliegende Querschnittsfläche im Gewächshaus auf der Höhe der Turmaustrittsöffnung.

In diesem Zusammenhang spielen alle dem Aufwind zuträglichen Energieanteile eine Rolle.

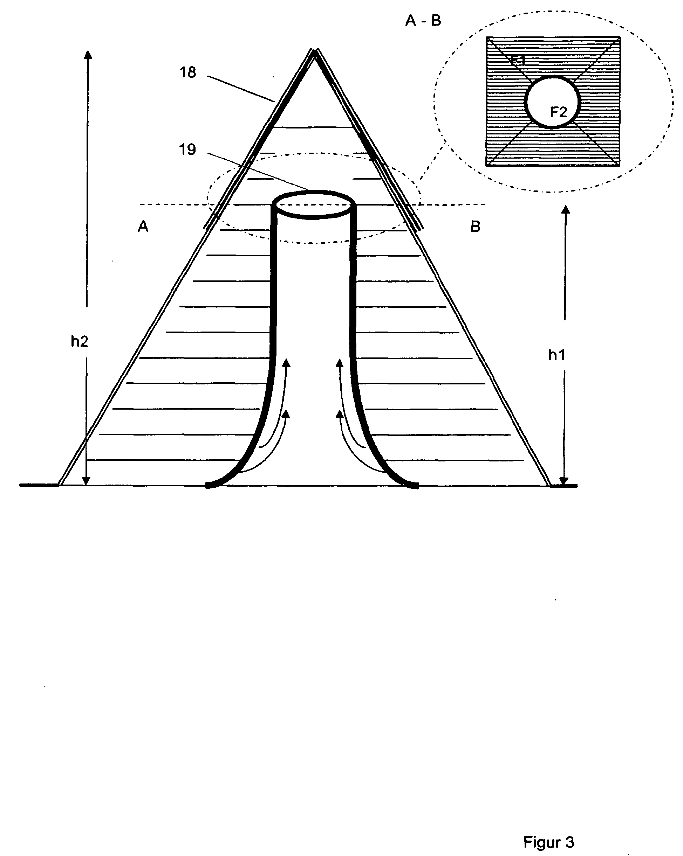

Hierzu sind auch weitere konstruktive Verhältnisse, wie sie in Figur 3 ersichtlich sind wichtig. Figur 3 stellt nochmals den Gewächshausturm in Seitenansicht in Form einer Pyramide dar . Darin ist das zentrale Austeifungselement als Turm 15 zentral platziert. Durch den Höhenunterschied h1 entsteht ein erster Anteil zum Aufwind, der sich aus dem barometrischen Höhenunterschied ergibt.

Dieser ist: $\Delta P_{bar} = \varsigma * g * h1$

$\varsigma$ = Dichte
g = Erdbeschleunigung
h1 = Höhe vom Boden bis zur Austrittsöffnung des Turmes

In nullter Näherung wird zunächst nur eine statische Betrachtung vorgenommen, und keine strömungsdynamische.

Da die Spitze des Gewächshauses Sonnenstrahlung ausgesetzt ist, und weil warme Luft ohnehin leichter ist und aufsteigt, kommt es oben zu einer enormen Hitzebildung.

Ferner kann durch den Aufwind im Gewächshaus ein Staudruck oben entstehen, der dem Aufwind im Turm entgegenstehen kann. Um den Aufwind dennoch aufrecht zu erhalten, muss das sich in Draufsicht ergebende Flächenverhältnis F1 zu F2 für diesen möglicherweise durch heiße Standorte wie Wüsten etc so sein, dass die Querschnittsfläche an der Austrittsöffnung F2 des Turmes kleiner, oder deutlich kleiner ist als die umgebende Querschnittsfläche F1 des inneren Gewächshauses, auf genau diesem Höhenniveau.

D.h.

$$F1 > F2$$

Dies gibt damit klar an, wie die Konstruktion in Bezug auf Höhe h2 des Gewächshauses und Höhe des innenliegenden Turmes unter Berücksichtung der Flankenwinkel des pyramidalen Gewächshauses und dem Durchmesser des Turmes. Diese Betrachtung darf qualitativ sein.

Ist beispielsweise der Abwärmebeitrag der Produktionsanlage überwiegend, dann bleibt die Umwälzung schon dadurch in Betrieb und die Beziehung F1>F2 dann nicht zwingend. Dies muß bei der Konzeption berücksichtigt werden.

Doch selbst bei einem im Inneren zwischen Turmspitze und Boden sich einstellenden stationären thermischen Zustand in Bezug auf die umgewälzte Sonnenwärme, wird der Turm innen immer noch den Anteil der stetigen Abwärme der im Turm integrierten Produktionsanlqage beitragen, der die so bewirkte Umluftwirkung durch den Temperaturgradienten aufrecht erhält.

Dies gilt dabei nicht nur für die Betrachtung, den kontraproduktiven Staudruck an der Spitze der Pyramide nicht überwiegen zu lassen.

Dabei steht die durch die oben angegebene barometrische Höhenformel erzielte Aufwindgröße als quasi motorische Einheit im Vordergund, so dass die Höhe h1 maximal sein soll, aber unter Vermeidung eines zu großen Staudruckes oben. Durch eine Verstellbarkeit der Höhe des Turmes und damit der Lage der Austrittsöffnung zur Querschnittfläche in der Pyramide, könnte dies sogar einstellbar sein. Dazu braucht die Spitze des Turmes nur teleskopierbar ausgestaltet zu sein.

Zum barometrischen Anteil zum Aufwind kommt auch der Abwärmeeinfluss der im Turm integrierten Produktionanlage hinzu. Dies deshalb, weil diese wohl überwiegend im unteren Teil platziert ist, dort wo kalte, oder deutlich kältere Luft eingespeist, angesaugt wird. Die Einspeisung von zum Teil 50 bis 100 °C heisser Abluft, zusammmen mit ausgestoßenem $CO_2$ bewirkt in einer maximal nur 15 bis 18 Grad Celsius warmen Umgebung einen enormen energetischen Beitrag zum Aufwind. Dieser strömt also gemeinsam mit $CO_2$-haltigem Abgas aus der obigen Austrittsöffnung des Turmes aus und wälzt sich von oben nach unten wieder um. Dies weil an der Spitzes des Gewächshauses außerhalb des Turmes keine summativen Aufwindkomponenten vorliegen. So wälzt sich die warme Luft an der Spitze des Gewächshauses wieder neben dem Turm nach unten um, vor allem, weil von unten die kalte Luft wieder nachströmt und durch den beständigen Aufwind wieder kalt angesaugt wird. Diese automatische thermische Umwälzung führt im Gewächshaus zu einer Anheizung auch der kalten Bereiche im Inneren des Gewächshauses.

Weiterhin kann die sich leicht aufheizende Spitze des pyramidalen Gewächshauses mit sogenannten optisch teildurchlässigen Photovoltaikelementen 18 bedeckt sein, entweder vom bekannten krisallinen Typ oder vom Typ neuer Kunststoffsolarzellen sein, wie sie vom Zermike Institute of advanced materials entwickelt wurde. Dies hat den Vorteil, dass die sich leicht aufheizende Spitze thermisch teilabgeschirmt wird, und somit aus dem abgeschirmten Teil des Spektrums dann noch Strom gewonnen wird. Dieser Strom kann sodann in Akkumulatoren gepuffert/gespeichert werden, und für den nächstlichen Betrieb des Gewächshauses im Sinne der Aufrechterhaltung der Photosynthese eingesetzt werden.

So können auch tagsüber lichtärmere Bereiche dieses Gewächshauses beleuchtet werden.

In sehr sonnenintensiven Regionen kann diese Einrichtung zum Kühlen vor Überhitzung und zugleich zur elektrischen Energieerzeugung auch ganz mit diesen teildurchlässigen photovoltaischen Zellen bedeckt sein.

Beispielsweise kann sogar die geschlossene Außenhaut der Einrichtung, in diesem Fall der Pyramide aus diesen photovoltaischen Elementen gebildet werden.

Bei der oben beschriebenen selbsttätigen Wärmeumwälzung wird vorausgesetzt, dass die strömungstechnische Eintrittsöffnung am Boden des Turms, oder nahe des Bodens des Turm ist und die Austrittsöffnung 19 in einer Höhe h1 liegt, die kleiner ist als die Höhe h2 des Gewächshauses. Durch die Ebene A-B ist ein Schnitt gelegt, der in der markierten Kreislinie in Draufsicht dargestellt ist. Der Schnitt ist genau auf der Höhe der oberen Austrittsöffung des Turmes gelegt.

Dies oben genannten Energiebeiträge werden durch die Gestalt des Zentralelementes und die Höhe des Gewächshauses summiert, und ergeben eine selbstmotorische passive Umwälzung von Kalt- und Heißluft.

Dies löst auf effiziente weise das Problem, dass es bei Gewächshochhäusern oben extrem heiss ist, und unten im lichtarmen Bereich extrem kalt ist. Bekanntermaßen erfolgt eine Kompensation bei bekannten Gewächshaustypen durch Fremdheizung, die Energie kostet. Dieses System benötigt keine Fremdheizung und keine Energie, wobei dieses erfindungsgemäße System die Spitze kühlt während sie den Boden und das Innere durch Umwälzung aufwärmt. Das Klima auch in dieser normalerweise kritischen Bauweise ist in diesem Gewächshaus gleichmäßig, und zwar ohne Energieeinsatz.

Figur 2 weist ein weiteres Detail auf. Das Gewächshaus verfügt bodenseitig, d.h. in diesem Beispiel quasi als Keller eine Bodeneinsenkung 14 auf, in welcher zusätzlich zu den Stellagen im oberen Bereich gezielt Wasserpflanzen angebaut werden können. Zur aktiven abgasbezogenen CO2-Düngung kann auch diese durch Einsprudelung von Abgas in Wasser erfolgen. Dies kann druckentspannt erfolgen, oder unter Druck und Bildung von Kohlensäure.

So wie auch in den zu Figur 1 beschriebenen Stellagen, d.h. den auf diesen angeordneten Wannen mit den Wasser- oder Schwimmpflanzen.

Es ist ratsam, im besagten Bodenbereich Schwachlichtpflanzen einzusetzen.

Insgesamt können auch Landpflanzen in freien Bereichen mit hinzugenommen werden. Hierzu eigenen sich wegen des hohen CO2-Verstoffwechselungsgrades alle C4-Pflanzen. Aber auch C3 und insbesondere CAM-Pflanzen sind deshalb von Vorteil weil diese nachtaktive $CO_2$-Atmer sind.

Eine weitere Alternative ist, den eingesenkten Bodenbereich 14 hermetisch abzuschließen, derart dass diese als Fermenter einer im Gewächshaus sogleich mit integrierten Biogasanlage ist. Dabei würden die Stellagen oberhalb des Fermenters die Biomasse liefern, die unten sogleich im Fermenter zur Biogaserzeugung verwendet wird. Dabei wäre innerhalb des Turmes die dort integrierte Produktionsanlage eine Aufmethanisierungsanlage, um aus dem Biogas mit ca 50% Methangehalt sogleich ortsnah den Methangehalt auf 96 oder 98%, und damit auf Erdgaseinspeiseequalität zu bringen. Eine Aufmethanisierungsanlage erzeugt im Abgas ebenso $CO_2$ und Wärme, die aber in das Gewächshaus innerhalb des Aufwindturmes wieder eingespeist werden kann.

Auch diese systemische Ausgestaltung liefert $CO_2$-neutrale Energie aus Sonnenkraft und Biomasse. So kann insbesondere die Bodenwanne auch für eine zusätzliche Anzucht von tierischer Biomasse verwendet werden, wie Fische, Krebse, Schalentiere, Algen, aber auch Bakterien und Hefen.

Insgesamt ist eine solche Beiordnung von tierischer Biomasse dann sinnvoll, wenn im geschlossenen Stoffzyklus bspw bei der Biogaserzeugung Reste anfallen die nicht als Düngestoff von Pflanzen verstoffwechselt werden können, wohl aber von den genannten Tieren. Dies gewährleistet in diesem System eine letzendliche vollständige Stoffverwertung einerseits, aber auch eine Erzeugung von hochwertigen Eiweißen und Fettsäuren andererseits.

Innerhalb des Gewächshauses können außer Wasserwannen auch Hydrokulturanpflanzungen vorgenommen werden, die auf die gleiche Weise mit $CO_2$-haltigem Abgas gedüngt werden.

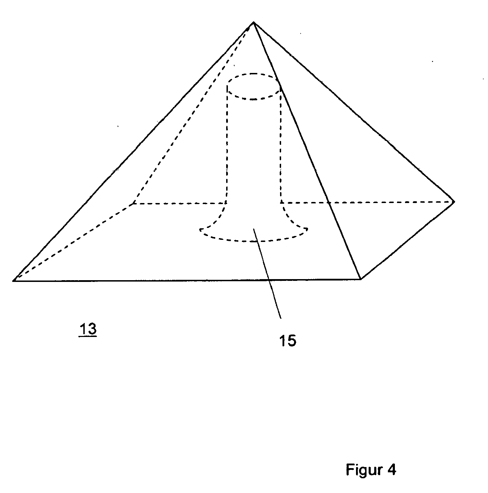

Figur 4 zeigt eine perspektivische Ansicht, bei welcher sichtbar wird, dass das turmfömige statische Zentralelement 15, welches zugleich als aufwindkraftbetriebene Umwälzpumpe für Wärme und $CO_2$ dient, zentral im pyramidalen Gewächshaus 13 steht.

Dies muss aber nicht pyramidal sein, sondern kann auch ein gerader Turm mit gleichförmig quadratischem, dreieckigem, oder runden Querschnitt sein.

Ein weiterer Doppelnutzen ist, wie oben bereits beschrieben, die statische Ausstützung eines hochbauenden Gewächshauses, bei welchem hohe Gewichtskräfte durch die Vielzahl der Wasserwannen und der Pflanzenmassen/Biomassen statisch abzufangen sind, und andererseits innerhalb dieses Turmes der Raum zur Integration einer Produktionsanlage in allen beschriebenen Beispielen dient.

Vorteilhaft sowohl in Bezug auf die Statik des Bauwerkes als auch auf die günstige Strömung ist der Fuß des statischen Zentralelementes 15 sich nach unten bspw gemäß einer Parabelfuktion folgend verbreiternd ausgebildet.

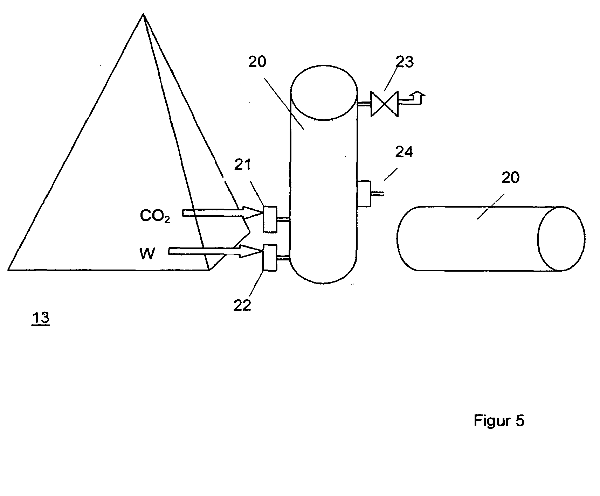

Figur 5 ziegt eine weitere Ausgestaltung, bei welcher mobile Container 20, vorzugsweise aber nicht ausschließlich in preiswerter zylindrischer Bauform verwendet werden können, deren Wandung aus lichtdurchlässigem Material besteht. Die Lichtdurchlässigkeit betrifft denjenigen Spektralbereich, der für die Photosynthese wichtig ist.

Diese Container 20 sind mit Wasser und Wasserpflanzen gefüllt, und können einer Einrichtung wie oben beschrieben noch zusätzlich beigeordnet werden. Sind diese Behältnisse/Container dann vollständig mit Biomasse, d.h. mit Wasserpflanzen vollgewachsen, so können diese abtransportiert werden, um ggfs andernorts geöffnet um entleert zu werden. Dabei sind diese Container 20 mit einem $CO_2$-Anschluß 21 versehen, durch welchen dieser, und die darin enthaltenen Pflanzen mit dem $CO_2$-Emitenten im Gewächshaus 13 zusätzlich versorgt werden. Das $CO_2$ oder das $CO_2$-haltige Abgas kann dabei gasförmig oder in Wasser unter Druck eingesprudelt eingespeist werden. Ein weiterer Anschluß 22 versorgt den Container mit anfallender Abwärme, die auch in Verbindung mit einer stetigen Wassernachführung mit temperiertem Wasser oder Abwasser gespeist werden kann.

Ferner ist der Container mit einem Druckablass 23 mit Überdruckventil ausgestattet, um bspw Sauerstoff oder nicht verstoffwechseltes $CO_2$-Luftgemisch ablassen zu können. Mit Hilfe dieser Container können logistische Konzepte mit kombiniert werden, bspw die Vermehrung und den Abtransport von Biomasse für die chemische Industrie. Nur zur Entnahme der so gewachsenen Wasserpflanzen werden diese Container geöffnet. Ein Grundbestand von Wasserpflanzen verbleibt im Container, damit diese wieder nachwachsen können. Hierzu wird der entleerte Container wieder zurück in die Nahe der besagten Einrichtung gebracht, bis dieser wieder vollgewuchert ist und zur Erntung ansteht.

Die Beerntung der Container kann, wie wahlweise auch im Gewächshaus durch Absaugung der Biomasse mit oder ohne Wasser erfolgen. Darüber hinaus können die Container mit einer eigenen Kunstlichtbeleuchtung ausgestattet sein, bspw durch LEDs.

Diese können entweder über einen elektrischen Anschluss von außen mit elektrischer Energie versorgt sein, oder eine eigene autarke Energieversorgung durch bspw eigene photovoltaische Elemente an der Außenwandung haben.

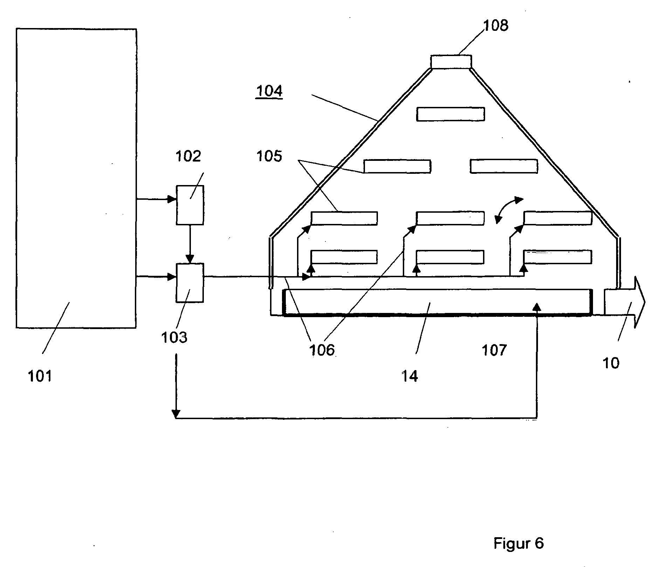

Figur 6 zeigt am Beispiel eines Hochhauses 101 den LIEFERANTEN für Abwasser 103. Dies kann aber auch eine sonstige Brauchwasserleitung oder Abwasserleitung sein, die schmutziges Wasser in das Gewächshaus 104 einleitet.

Die Abgase 102 von Energieerzeugungseinrichtungen im Hochhaus, oder von wo auch immer werden ebenfalls bestimmungsgemäß in das Gewächshaus eingeleitet in dem vorzugsweise aquatische Pflanzen angelegt sind. Das Abwasser 103 des Hochhauses, oder das Abwasser aus dem Abwassernetz wird dabei entweder der Bodenwanne 14 zugeführt, oder direkt den Pflanzwannen 105 in denen die aquatischen Pflanzen angesiedelt sind. Dort wird die enthaltene Schmutzfracht verstoffwechselt in den Pflanzen. Hierzu werden vorzugsweise Wassserlinse (Lemnacea) verwendet. Das CO2-reiche Abgas wird zusätzlich als Dünger zugeführt. Und zwar entweder gelöst in Wasser oder direkt in Kaltvernebelung.

Das stark propagierende Biomassenwachstum führt zu einer regelmäßigen Ernte der Biomasse, die dann bspw wieder zu Energie, oder Biogassubstrat etc verarbeitet wird. Dies findet gemäß Hauptpatent DE 10 2009 008093.7-23 auch vorzugsweise innerhalb des Gewächshauses in einem vollständig geschlossenen oder teilgeschlossenen Stoffzyklus statt. Bspw auch zur Heizung des Hochhauses. Bei externer Verwertung der Biomasse findet eine Ausleitung derselben getrocknet oder feucht über eine Pipeline oder eine Fördereinrichtung 330 statt.

Über den Ablass 108 kann sauerstoffreiche Luft abgezogen werden, und wieder ins Hochhaus und deren Klimaanlage zurückgeführt werden.

Die Bodenwanne kann, wie oben erwähnt auch der Biogasproduktion dienen. Hierzu ist die Bodenwanne 14 mit einem Deckel oder einer Folie abgeschlossen. Mit anderen Worten ist die übliche Schmutzfracht eines Gebäudes oder eines Abwassernetzes von seinen Inhaltsstoffen auch geeignet den Gärbrei einer Biogasanlage zur Gasproduktion zumindest zu unterstützen.

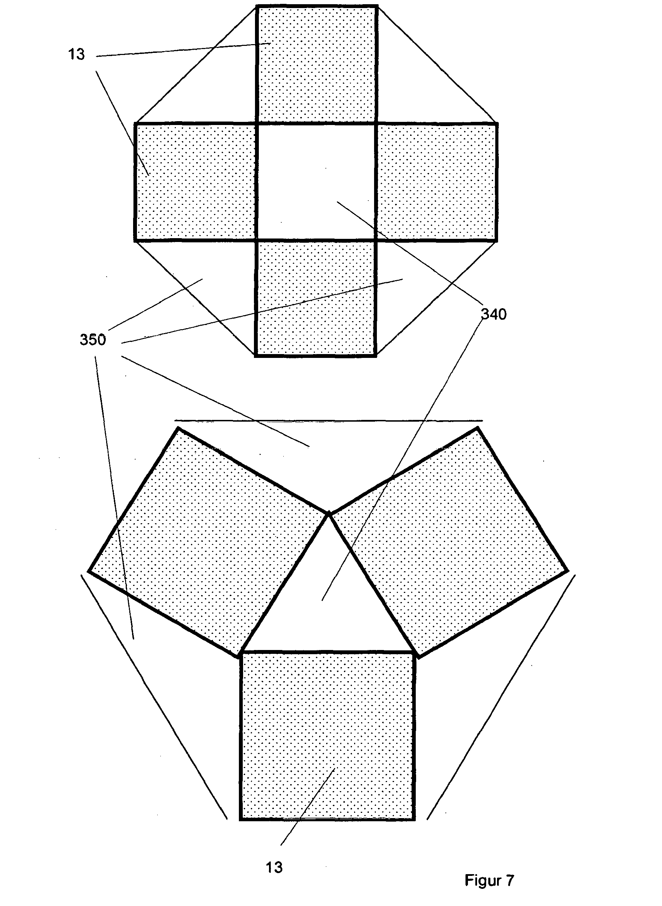

Figur 7 zeigt 2 Ausgestaltungen für Gewächshausarragments. Der obere Teil der Figur 7 zeigt die Anordnung von 4 Gewächshäusern. Bei denen jeweils eine Seite der Grundfläche einen gemeinsamen Innenhof 340 umschließen. Dieser kann dann zusätzlich noch mit weißen Tüchern oder Tafeln, oder mit Lichtreflektionselementen 350 versehen sein, so dass damit der effektive Lichteinfall in die Gewächshäuser erhöht werden kann.

**B**ezugszeichen

| 1 | Abgasanlage/Produktionsanlage |
| 2 | Gaswäscher |
| 3 | Druckspeicher |
| 4 | Licht- / UV-licht-durchlässige Wandung |
| 5 | Pflanzenwannen |
| 6 | Wasser mit Kohlensäure |
| 7 | Fördereinrichtung für Biomasse |
| 8 | Ablassklappe / - ventil |
| 13 | Gewächshaus (Pyramide) mit Wandung |
| 14 | Bodenwanne |
| 15 | statisches turmförmiges Zentralelement |

| 16 | Stellagen/Pflanzwannen mit Wasser+Wasserpflanzen |
| 17 | integrierte Produktionslanlage (1) |
| 18 | optisch teildurchlässige Photovoltaikelemente |
| 19 | obere Öffnung des statischen Zentralelementes |
| 20 | Silos, Tanks (Behältnisse) mit Wasserpflanzen |
| 21 | CO$_2$-Anschluß |
| 22 | Warmwasseranschluss |
| 23 | Ablassventil |
| 24 | Elektrischer Anschluss |
| A-B | Querschnitt durch Gewächshaus 13 auf der Höhe der Austrittsöffnung 19 des turmförmigen Zentralelementes 15 |
| 101 | Hochhaus oder Abgaserzeugungsanlage |
| 102 | Abgas aus Heizung, oder Energieversorgung |
| 103 | Abwasseranschluss |
| 104 | Gewächshaus |
| 105 | Pflanzenwannen |
| 106 | Wasser mit Kohlensäure |
| 108 | Auslass für sauerstoffreiche Luft |
| 330 | Auslasspipeline oder Fördereinrichtung für Biomasse |
| 340 | Innenhof |
| 350 | weiße Tücher oder Lichtreflexionsmittel |

**Patentansprüche**

1. Verfahren zur biologischen und okologisch verträglichen Umsetzung von CO$_2$ in Kohlenstoff und Sauerstoff, dass in einem Gewächshaus (13) für Biomasse eine Einrichtung zur Erzeugung von Energie oder Energieeeträgern und/oder eine chemische Produktionseinrichtung integriert ist, derart, dass die durch die Energie- oder Energieträger-Erzeugungseinrichtung und/oder die chemische Produktionseinrichtung im Gewächshaus (13) erzeugte Biomasse und die in der Einrichtung erzeugte CO$_2$-Menge und/oder die anfallende Wärmemenge in einem zumindest teilweise geschlossenen Stoff- und CO$_2$-Kreislauf im Gewächshaus (13) verbleiben, dadurch gehennzeichnet, dass innerhalb des Gewächshauses (13), welches hochbauend ausgestaltet ist, ein statisches turmförmiges zentralelement (15) angeordnet ist, durch welches innerhalb des Gewächshauses (13) eine selbsttätige durch Thermik betriebene Luftumwälzung stattfindet.

2. Verfahren nach Anspruch 1, **dadurch gekennzeichnet, dass** die Abwärme der innerhalb des Zentralementes (15) integrierten Produktionseinrichtung, insbesondere zu Bioethanol-, Biogas, Stromerzeugung, etc, mit in den Aufwind innerhalb des Zentralelementes (15) eingespeist wird.

3. Verfahren nach einem der vorhergehenden Ansprüche, **dadurch gekennzeichnet, dass** dem Gewächshaus (13) außerhalb liegend oder stehend geschlossene, aber temporär zu äffnende Behältnissel (20) aus lichtdurchlässigem Wandmaterial beigeordnet sind, in welchen Biomasse eingebracht wird, und über einen CO2-Anschluss, sowie einen Warmluft-/warmwasseranschluß von außen $CO_2$ und Wärme oder Abwärme zugeführt wird, und dass die Behältnisse (20) zeitweise zur Erntung der Biomasse geöffnet und/oder insgesamt abtransportiert werden.

4. Verfahren nach einem der vorhergehenden Ansprüche,
   **dadurch gekennzeichnet,**
   **dass** zur biologischen und ökologisch verträglichen Umsetzung von $CO_2$ in Kohlenstoff und Sauerstoff, in das Gewächshaus (13) das Abwasser einer Abwasser- oder Brauchwasserleitung eingespeist wird, derart, dass das Abwasser entweder in die Bodenwanne (14), oder direkt in Pflanzwannen oder -rinnen des Gewächshauses (13) eingeleitet wird.

5. Verfahren nach Anspruch 4,
   **dadurch gekennzeichnet,**
   **dass** die Biomasse nach Verstoffwechselung der Inhaltsstoffe aus dem Abwasser ein vorgereinigtes Wasser zurückgelassen, welches entweder innerhalb des Gewächshauses (13) oder außerhalb desselben einer Trinkwasseraufbereitung bis zur Erreichung von Trinkwasserqualität zugeführt wird und dort in üblicher weise nachbehandelt wird.

6. Verfahren nach Anspruch 4 oder 5,
   **dadurch gekennzeichnet,**
   **dass** arzneimittelbelastete Abwässer eingeleitet werden, welche durch pflanzliche Verstoffwechselung im so vorgereinigten Wasser abgebaut werden.

7. Verfahren nach Anspruch 4 oder 5,
   **dadurch gekennzeichnet,**
   **dass** das Schmutzwasser zur Vorklärung in die Bodenwanne oder die Pflanzwannen oder -rinnen eingeleitet und danach die Weiterleitung des vorgereinigten Wassers in die Pflanzwannen oder Pflanzrinnen erfolgt.

8. Verfahren nach Anspruch 4 oder 5,
   **dadurch gekennzeichnet,**
   **dass** bei Einleitung des Abwassers in die Bodenwanne (14) des Gewächshauses (13) dort in der Bodenwanne eine Biogaserzeugungsanlage integriert ist, derart, dass dort ein Gärbrei aus im Gewächshaus (13) erzeugter, oder extern erzeugter Biomasse vorhanden ist, dem das Abwasser mit seiner verschmutzungslast, oder mit Klärschlamm gesteuert zugeführt wird.

9. Verfahren nach einem der vorhergehenden Ansprüche,
   **dadurch gekennzeichnet,**
   **dass** das Biogas innerhalb des Gewächshauses (13) aufmethanisiert wird, und das dabei entstehende Kohlendioxid-Gas als CO2-Dünger der Biomasse rückgeführt wird, während das aufmethanisierte Gas aus dem Gewächshaus (13) zur externen Nutzung oder Einspeisung ausgeleitet wird.

10. Einrichtung zur biologischen Umsetzung von $CO_2$ in Kohlenstoff und Sauerstoff, zur Durchführung des Verfahren nach einem der Ansprüche 1 bis 9,
    **dadurch gekennzeichnet, dass** das Gewächshaus (13) hochbauend, und mit einem statischen Zentralelement (15) versehen ist, über welches eine etagenweise Anordnung von Pflanzungsetagen (16) statisch abgestützt und das Gewächshaus damit ausgesteift ist, wobei der innere Hohlraum dieses als Säule ausgebildeten statischen Zentralelementes (15) zur integrierten Aufnahme eines Bioethanolwerkes (17) und/oder eines Biogaswerkes (17) und/oder einer Biogasaufmethanisierungs-einrichtung (17) und/oder eines Pelletierwerkes (17) dient, und, dass durch das Zentralelement (15) innerhalb des Gewächshauses eine selbsttätige durch Thermik betrieben Luftumwalzung stattfindet.

11. Einrichtung nach Anspruch 10,
    **dadurch gekennzeichnet, dass** die Stromerzeugungseinrichtung eine mit Biogas oder aufmethanisiertem Biogas gespeiste Brennstoffzelle ist.

12. Einrichtung nach einem der Ansprüche 10 bis 11,
    **dadurch gekennzeichnet, dass** die Etagen im Gewächshaus mit flachen Wasserwannen (16) ausgestattet sind, in denen starkwüchsige Biomassenpflanzen in Form von Wasser- oder Schwimmpflanzen angeordnet sind, und dass die Wannen (16) in einem nach oben gebauten Gestell mit lichteinfallsbezogenen Zwischenräumen platziert sind, und dass die Statik dieses Gestells zusätzlich zu vertikalen Stützen auch horizontal durch Querverbinder am Zentralelement befestigt und statisch so abgefangen sind.

13. Einrichtung nach einem der vorhergehenden Ansprüche 10 bis 12,
    **dadurch gekennzeichnet, dass** das Zentralelement (15) zum einen zur statischen Aussteifung des Gewächshauses dient, und die vertikalen Kräfte durch darin bepflanzte Etagen durch Auflageträger vertikal abgefangen werden, und das Zentralement (15) als selbsttätige passive Aufwindturbine wirkt, die kalte Luft von unten ansaugend, nach oben zur warmen Spitze des Gewächshauses getrieben wird, von wo aus sie durch den sich aufbauenden Druck als Warmluft im Austausch wieder nach unten gedrückt wird.

14. Einrichtung nach einem der vorhergehenden Ansprüche 10 bis 13,
**dadurch gekennzeichnet, dass** am Boden bzw unterhalb des Bodens eine in den Boden eingelassene zusätzliche Wasserwanne (14) vorgesehen ist, in welcher reine Wasserpflanzen eingesetzt sind, und dass diese Wasserwanne (14) vom oben ablaufenden warmen Wasser gespeist/beheizt wird.

15. Einrichtung nach Anspruch 14,
**dadurch gekennzeichnet, dass** die Wanne (14) hermetisch ansonsten abgeschlossen ist und lediglich mit Wasser-/Warmwasser- Zu- und Ablauf, einem CO2-Einspeisunganschluss und einem druckgesteuerten Gasablass versehen ist.

16. Einrichtung nach einem der Ansprüche 10 bis 15,
**dadurch gekennzeichnet, dass** zumindest der obere Bereich des Gewächshauses mit teiltransparenten photovoltaischen Elementen (18) versehen ist, sowie einem Akkumulator zur Speicherung der elektrischen Energie und Speisung der Kunstlichtbeleuchtung.

17. Einrichtung nach einem der Ansprüche 10 bis 16,
**dadurch gekennzeichnet, dass** dem Gewächshaus außerhalb desselben mobile Wuchscontainer mit Biomasse beiordenbar sind, die mit einem eigenen CO2-Anschluss und/oder einem Wärmeanschluß, und/oder einem elektrischen Anschluß zur Versorgung oder Steuerung einer integrierten Kunstlichteinrichtung ausgestattet ist.

18. Einrichtung einem der Ansprüche 10 bis 17,
**dadurch gekennzeichnet,**
**dass** zur biologischen und ökologisch verträglichen Umsetzung von $CO_2$ in Kohlenstoff und Sauerstoff an das Wassersystem des Gewächshauses eine Abwasser- oder Brauchwasserleitung angeschlossen ist, an die Abwasserleitung einer Abwasserkläranlage angeschlossen ist, derart, dass das Abwasser entweder in die Bodenwanne (14), oder direkt in die Pflanzwannen des Gewächshauses eingeleitet bzw angeschlossen ist.

19. Einrichtung nach Anspruch 18,
**dadurch gekennzeichnet,**
**dass** die Bodenwanne am Boden oder im Keller des Gewächshauses eine Biogaserzeugungsanlage ist, bei welchem der Gärbrei aus Biomasse und/oder der Schmutzlast von eingespeistem Abwasser besteht.

20. Einrichtung nach einem der Ansprüche 10 bis 19,
**dadurch gekennzeichnet,**
**dass** das Gewächshaus mit einem Gebäude funktional derart kombiniert ist, dass die Abgase von Klimaanlagen und/oder Energieerzeugungsanlagen des Gebäudes zur Verstoffwechselung des CO2 in das Gewächshaus leitbar sind, und dass das im Gewächshaus entstehende sauerstoffreiche Luft in das Gebäude zurückleitbar ist, und/oder dass die Abwässer des Gebäudes zur Verstoffwechselung in das Gewächshaus einleitbar sind.

21. Einrichtung nach einem der Ansprüche 10 bis 20,
**dadurch gekennzeichnet,**
**dass** das Gewächshaus mit einer aus dem Gewächshaus herausgeführten Pipeline oder Fördereinrichtung verbunden ist, über welche die im Gewächshaus erzeugte Biomasse mittels Wasser, oder Luft oder Förderbändern aus dem Gewächshaus heraustransportierbar ist.

22. Einrichtung nach einem der Ansprüche 10 bis 21,
**dadurch gekennzeichnet,**
**dass** drei oder vier oder mehrere Gewächshäuser so aneinander gestellt sind, dass die Gewächshäuser mit jeweils einer Seite einen gemeinsamen lichtdurchfluteten Innenhof umgrenzen, und dass im Innenhof und/oder an den Außenseiten des Gewächshausarrangements lichtreflektierende Elemente, beispielweise weiße Tücher oder Spiegelelemente angeordnet sind, die den effektiven Lichteinfall in die Gewächshauser erhöhen.

23. Verwendung von Wasserpflanzen zur Durchführung des Verfahrens nach einem der Ansprüche 1 bis 9 und der Einrichtung nach einem der Ansprüche 10 bis 22, aus der botanischen Gruppe der aufschwimmenden Wasserpflanzen Lemna (Familie der Wasserlinsen) und/oder Eichhornia crassipes (Wasserhyazinthe) und/oder Pistia stratiotes (Wassersalat) und/oder Hydrocharis morsus ranae (Froschbiss) und/oder Stratiotes aliodes (Krebsschere) und/oder Azolla careoliniana (Feenmoos) und/oder Salviania auriculata (kleiner Büschelfarn) und/oder Limnobium lavigatum (kleiner Froschbiss) und/oder Salviania oblongifolia (langblättriger Büschelfarn) und/oder Hygroryza aristata Schwimmgras und/oder Trapa natans (Wassernuss) und/oder Neptunia plena (Wassermimosen) und/oder Riccia fluitans (Teichlebermoos) und/oder Callitriche hermaphroditica (Wasserstern), und/oder Wassermose nämlich Javamoos, Quellmoos, Leuchtmoos, und/oder Zwergwasserlinsen nämlich Wolffia, und/oder Brunnenkresse, und/oder Winterpordulak, und/oder Sommerpordulak, und/oder Winterpostelei,
und/oder nicht aufschwimmende Algen und/oder die Verwendung von tierischer Biomasse indem in Wasserbehältnissen Fische und/oder Schalentiere, und/oder Hefen und/oder Bakterien eingebracht sind und in den Verwertungsstoffzyklus des Gewächshauses mit eingebunden sind.

## Claims

1. Method for the biologically and ecologically compatible conversion of $CO_2$ into carbon and oxygen, in that a mechanism for generating energy or energy carriers and/or a chemical production mechanism is/are integrated in a greenhouse (13) for biomass in such a way that the biomass generated in the greenhouse (13) by the energy or energy carrier generating mechanism and/or the chemical production mechanism and the $CO_2$ quantity generated in the mechanism and/or the resulting heat quantity remain in an at least partially closed materials and $CO_2$ cycle in the greenhouse (13), **characterized in that** a static tower-like central element (15), via which an automatic, thermally driven air circulation takes place inside the greenhouse (13), is arranged inside the greenhouse (13), which is built for height.

2. Method according to Claim 1, **characterized in that** the exhaust heat of the production mechanism integrated in the central element (15), in particular for bioethanol, biogas, electric power production, etc., is fed into the updraft inside the central element (15).

3. Method according to either of the preceding claims, **characterized in that** containers (20) made of transparent wall material are attached, lying or standing, to the greenhouse (13) on the outside thereof, which containers are closed but designed to be temporarily opened, into which containers biomass is introduced, and $CO_2$ and heat or exhaust heat are infed from the outside via a $CO_2$ connection and via a hot air/hot water connection, and that from time to time the containers (20) are opened and/or hauled away entirely for harvesting the biomass.

4. Method according to one of the preceding claims, **characterized in that** for the biologically and ecologically compatible conversion of $CO_2$ into carbon and oxygen, the wastewater of a wastewater or process water line is fed into the greenhouse (13) in such a way that the wastewater is piped either into the floor tub (14) or directly into plant tubs or troughs of the greenhouse (13).

5. Method according to Claim 4, **characterized in that** the biomass, after metabolization of the content from the wastewater, leaves behind pre-cleaned water that is supplied to a drinking water treatment until attaining drinking water quality, either inside the greenhouse (13) or outside the same, and is post-treated there in standard fashion.

6. Method according to Claim 4 or 5, **characterized in that** drug-contaminated wastewater is piped in, which is metabolized by plants in the water thus pre-cleaned.

7. Method according to Claim 4 or 5, **characterized in that** the dirty water is piped into the floor tub or the plant tubs or troughs for preliminary sedimentation and the pre-cleaned water is then redirected into the plant tubs or plant troughs.

8. Method according to Claim 4 or 5, **characterized in that** for piping the wastewater into the floor tub (14) of the greenhouse (13), a biogas generating unit is integrated in said floor tub in such a way that a fermentation mash consisting of biomass generated inside the greenhouse (13) or externally is present therein, to which the wastewater with its pollutant load, or with sludge, is fed in a controlled manner.

9. Method according to one of the preceding claims, **characterized in that** the biogas is enriched by methane inside the greenhouse (13), and the carbon dioxide gas thus arising is fed back to the biomass as $CO_2$ fertilizer, whereas the methane-enriched gas is piped out of the greenhouse (13) for external use or supply.

10. Mechanism for the biological conversion of $CO_2$ into carbon and oxygen, for carrying out the method according to one of Claims 1 to 9, **characterized in that** the greenhouse (13) is built for height and is equipped with a static central element (15), via which a tier-wise arrangement of plant tiers (16) is statically supported and with which the greenhouse is braced, wherein the hollow interior of this static central element (15) configured as a column is used for the integrated accommodation of a bioethanol plant (17) and/or of a biogas plant (17) and/or of a methane-enrichment mechanism (17) for biogas and/or of a pelleting plant (17), and that an automatic thermally driven air circulation takes place inside the greenhouse via the central element (15).

11. Mechanism according to Claim 10, **characterized in that** the electricity generating mechanism is a fuel cell supplied with biogas or methane-enriched biogas.

12. Mechanism according to either of Claims 10 and 11, **characterized in that** the tiers in the greenhouse are equipped with shallow water tubs (16) in which vigorous biomass plants in the form of aquatic or floating plants are arranged, and that the tubs (16) are positioned in a frame built upwards with spaces configured with regard to light incidence, and that in addition to vertical supports, the statics of this frame are also fortified horizontally by cross connectors on the central element and thus statically absorbed.

13. Mechanism according to one of the preceding Claims 10 to 12, **characterized in that** the central element (15) is used for the static stiffening of the greenhouse on the one hand, and the vertical forces exerted by planted tiers therein are absorbed vertically by girder supports, and the central element (15) acts as an automatic passive updraft turbine, wherein cold air sucked in from below is driven upward to the warm peak of the greenhouse, from where it is forced by the rising pressure back down as hot air in exchange.

14. Mechanism according to one of the preceding Claims 10 to 13, **characterized in that** on the floor or beneath the floor, provision is made of an additional water tub (14) recessed in the floor in which purely aquatic plants are introduced, and that this water tub (14) is supplied/heated with hot water flowing down from above.

15. Mechanism according to Claim 14, **characterized in that** the tub (14) is only equipped with a water/hot water inlet and outlet, a $CO_2$ supply connection, and a pressure-controlled gas discharge and is otherwise hermetically sealed.

16. Mechanism according to one of Claims 10 to 15, **characterized in that** at least the upper section of the greenhouse is equipped with partially transparent photovoltaic elements (18) as well as with a rechargeable battery for storing electrical energy and supplying the artificial lighting system.

17. Mechanism according to one of Claims 10 to 16, **characterized in that** mobile growing containers with biomass can be attached to the greenhouse, on the outside thereof, which are equipped with their own $CO_2$ connection and/or a heat connection and/or an electrical connection for supplying or controlling an integrated artificial lighting mechanism.

18. Mechanism one of Claims 10 to 17, **characterized in that** for the biologically and ecologically compatible conversion of $CO_2$ into carbon and oxygen, a wastewater or process water line is connected to the water system of the greenhouse, connected to the wastewater line of a wastewater treatment plant in such a way that the wastewater is piped (or connected to) either into the floor tub (14) or directly into the plant tubs of the greenhouse.

19. Mechanism according to Claim 18, **characterized in that** the floor tub on the floor or in the basement of the greenhouse is a biogas generation unit in which the fermentation mash consists of biomass and/or the pollutant load of piped-in wastewater.

20. Mechanism according to one of Claims 10 to 19, **characterized in that** the greenhouse is functionally combined with a building in such a way that the exhaust gases from air conditioners and/or power generation plants of the building can be conducted into the greenhouse for metabolizing the $CO_2$, and that the oxygen-rich air produced in the greenhouse can be conducted back into the building, and/or that the wastewater of the building can be conducted into the greenhouse for metabolization.

21. Mechanism according to one of Claims 10 to 20, **characterized in that** the greenhouse is connected to a pipeline or conveyor mechanism leading out of the greenhouse, via which the biomass generated in the greenhouse can be transported out of the greenhouse by means of water or air or conveyor belts.

22. Mechanism according to one of Claims 10 to 21, **characterized in that** three or four or more greenhouses are positioned next to each other such that the greenhouses each delimit, with one side, a common inner courtyard suffused with light, and that light-reflecting elements such as white cloths or mirror elements, which increase the effective light incidence in the greenhouses, are arranged in the inner courtyard and/or on the exteriors of the greenhouse arrangement.

23. Use of aquatic plants for carrying out the method according to one of Claims 1 to 9 and of the mechanism according to one of Claims 10 to 22, from the botanical group of the floating aquatic plants *Lemna* (duckweed family) and/or *Eichhornia crassipes* (water hyacinth) and/or *Pistia stratiotes* (water cabbage) and/or *Hydrocharis morsus-ranae* (frogbit) and/or *Stratiotes aliodes* (water soldier) and/or *Azolla careoliniana* (Carolina mosquito fern) and/or *Salvinia auriculata* (water fern) and/or *Limnobium laevigatum* (Amazon frogbit) and/or *Salvinia ohlongifolia* (giant salvinia water fern) and/or *Hygroryza aristata* (Asian watergrass) and/or *Trapa natans* (water chestnut) and/or *Neptunia plena* (water dead-and-awake) and/or *Riccia fluitans* (floating crystalwort) and/or *Callitriche hermaphroditica* (northern water-starwort) and/or water mosses, namely Java moss, antifever fontanalis moss, luminous moss, and/or watermeal, namely *Wolffia,* and/or watercress, and/or miner's lettuce and/or spring beauty and/or purslane and/or non-floating algae and/or the use of animal biomass, wherein fish and/or shellfish and/or yeasts and/or bacteria are introduced into water containers and incorporated into the waste material cycle of the greenhouse.

## Revendications

1. Procédé de transformation biologique et écologiquement compatible de $CO_2$ en carbone et en oxygène, en ce que dans une serre (13) pour biomasse est intégré un système de génération d'énergie ou de ressources énergétiques et/ou un système de production chimique, de sorte que la biomasse générée dans la serre (13) par le système de génération d'énergie ou de ressources énergétiques et/ou le système de production chimique et la quantité de $CO_2$ générée dans le système et/ou la quantité d'air produite restent dans un circuit de matière et de $CO_2$ au moins partiellement fermé dans la serre (13), **caractérisé en ce qu'**à l'intérieur de la serre (13) qui est conçue en hauteur est placé un élément central (15) statique en forme de tour, par l'intermédiaire duquel a lieu à l'intérieur de la serre (13) un brassage d'air automatique conduit par ascendance thermique.

2. Procédé selon la revendication 1, **caractérisé en ce que** la chaleur perdue du système de production intégré dans l'élément central (15) est alimentée notamment pour la génération de bioéthanol, de biogaz, de courant électrique, etc. avec le courant d'air ascendant à l'intérieur de l'élément central (15).

3. Procédé selon l'une quelconque des revendications précédentes, **caractérisé en ce que** des contenants (20) en matériau de paroi transparent, situés à l'extérieur ou debout et fermés, mais à ouvrir temporairement, dans lesquels on introduit de la biomasse sont associés à la serre (13) et par l'intermédiaire d'un raccord de $CO_2$, ainsi que d'un raccord d'air chaud/d'eau chaude, on alimente du $CO_2$ et de la chaleur ou des chaleurs perdues et **en ce que** pour récolter de la biomasse, on ouvre temporairement les contenants (20) et/ou on les évacue en totalité.

4. Procédé selon l'une quelconque des revendications précédentes, **caractérisé en ce que** pour la transformation biologiquement et écologiquement compatible de $CO_2$ en carbone et en oxygène, on alimente dans la serre (13) les eaux usées d'un conduit d'eaux usées et d'eaux sanitaires, de sorte que les eaux usées soient introduites soit dans la cuve de fond (14) ou directement dans des cuves ou rigoles végétales de la serre (13).

5. Procédé selon la revendication 4, **caractérisé en ce qu'**après la métabolisation des ingrédients des eaux usées la biomasse fait ressortir une eau pré-épurée qui est alimentée, soit à l'intérieur de la serre (13) ou à l'extérieur de celle-ci vers un traitement d'eau potable, jusqu'à atteindre la qualité d'eau potable et y subir un traitement ultérieur habituel.

6. Procédé selon la revendication 4 ou 5, **caractérisé en ce qu'**on introduit des eaux usées chargées de médicament que l'on dégrade par métabolisation végétale dans l'eau ainsi pré-épurée.

7. Procédé selon la revendication 4 ou 5, **caractérisé en ce que** pour la pré-décantation, on introduit les eaux souillées dans la cuve de fond ou dans les cuves ou rigoles végétales et **en ce que** par la suite, il s'effectue le réacheminement de l'eau pré-épurée dans les cuves végétales ou rigoles végétales.

8. Procédé selon la revendication 4 ou 5, **caractérisé en ce que** lors de l'introduction des eaux usées dans la cuve de fond (14) de la serre (13), il y est intégré dans la cuve de fond un système de génération de biogaz, de telle sorte qu'une pulpe fermentée en biomasse générée dans la serre (13) ou en externe y est présente, à laquelle on conduit de manière commandée les eaux usées avec leur charge polluante ou avec des boues de curage.

9. Procédé selon l'une quelconque des revendications précédentes, **caractérisé en ce qu'**on méthanise le biogaz à l'intérieur de la serre (13) et qu'on recycle le gaz de dioxyde de carbone ainsi produit en tant qu'engrais au $CO_2$ dans la biomasse, alors qu'on évacue le gaz méthanisé de la serre (13), pour un usage externe ou pour l'alimentation.

10. Système de transformation biologique de $CO_2$ en carbone et en oxygène, destiné à réaliser le procédé selon l'une quelconque des revendications 1 à 9, **caractérisé en ce que** la serre (13) est construite en hauteur et munie d'un élément central (15) statique, par l'intermédiaire duquel un agencement par étage d'étages de plantations (16) est statiquement soutenu et la serre est de ce fait rigidifiée, la cavité creuse intérieure de cet élément central (15) statique conçu en tant que colonne servant au logement intégré d'un mécanisme de bioéthanol (17) et/ou d'un mécanisme de biogaz (17) et/ou d'un système de méthanisation (17) de biogaz et/ou d'un mécanisme de pelletisation (17) et **en ce que** par l'intermédiaire de l'élément central (15), il s'effectue à l'intérieur de la serre un brassage d'air automatique, conduit par ascendance thermique.

11. Système selon la revendication 10, **caractérisé en ce que** le système de génération de courant électrique est une cellule de combustible alimentée en biogaz ou en biogaz méthanisé.

**12.** Système selon l'une quelconque des revendications 10 à 11, **caractérisé en ce que** les étages dans la serre sont équipés de cuves à eau (16) plates dans lesquelles sont placés des végétaux à biomasse à forte croissance sous la forme de plantes aquatiques ou de plantes flottantes et **en ce que** les cuves (16) sont placées dans un bâti construit vers le haut avec des espaces intermédiaires favorisant l'incidence de lumière et **en ce qu'**en supplément d'appuis verticaux, la statique dudit bâti est également fixée horizontalement par des traverses sur l'élément central et statiquement ainsi absorbée.

**13.** Système selon l'une quelconque des revendications 10 à 12 précédentes, **caractérisé en ce que** l'élément central (15) sert d'une part au renfort statique de la serre et les forces verticales sont absorbées par des étages qui y sont végétalisés, verticalement par des longerons et l'élément central (15) fait office de turbine automatique passive d'air ascendant, l'air froid aspiré par le bas étant entraîné vers le haut, en direction de la pointe chaude de la serre, d'où il est repoussé en tant qu'air chaud vers le bas, par échange, du fait de la pression qui s'établit.

**14.** Système selon l'une quelconque des revendications 10 à 13 précédentes, **caractérisé en ce que** sur le fond ou en-dessous du fond, il est prévu une cuve d'eau (14) supplémentaire encastrée dans le fond, dans laquelle sont insérées des pures plantes aquatiques et **en ce que** cette cuve d'eau (14) est alimentée/chauffée par l'eau chaude s'écoulant par le haut.

**15.** Système selon la revendication 14, **caractérisé en ce que** la cuve (14) est par ailleurs hermétiquement fermée et est uniquement munie d'une alimentation et d'une évacuation d'eau/d'eau chaude, d'un raccord d'alimentation de $CO_2$ et d'une sortie de gaz commandée par pression.

**16.** Système selon l'une quelconque des revendications 10 à 15, **caractérisé en ce qu'**au moins la zone supérieure de la serre est munie d'éléments (18) photovoltaïques partiellement transparents, ainsi que d'un accumulateur pour l'accumulation de l'énergie électrique et l'alimentation de l'éclairage par lumière artificielle.

**17.** Système selon l'une quelconque des revendications 10 à 16, **caractérisé en ce qu'**à la serre peuvent être associés à l'extérieur de celle-ci des conteneurs de pousse mobiles avec biomasse qui sont équipés d'un propre raccord à $CO_2$ et/ou d'un raccord de chaleur et/ou d'un raccord électrique pour alimenter ou commander un système intégré de lumière artificielle.

**18.** Système l'une quelconque des revendications 10 à 17, **caractérisé en ce que** pour la transformation biologique et écologiquement compatible de $CO_2$ en carbone et en oxygène, un conduit d'eaux usées ou d'eaux sanitaires est raccordé au système d'eau de la serre, un système de décantation est raccordé au conduit d'eaux usées, de sorte que les eaux usées soient introduites ou raccordées soit dans la cuve de fond (14) ou directement dans les cuves végétales de la serre.

**19.** Système selon la revendication 18, **caractérisé en ce que** la cuve de fond dans le fond ou dans la cave de la serre est un système de génération de biogaz, dans lequel la pulpe fermentée est constituée de biomasse et/ou la charge polluante est constituée d'eaux usées alimentées.

**20.** Système selon l'une quelconque des revendications 10 à 19, **caractérisé en ce que** la serre est fonctionnellement associée à un bâtiment, **en ce que** pour la métabolisation du $CO_2$, les gaz évacués par des climatisations et/ou des systèmes de génération d'énergie du bâtiment peuvent être dirigés dans la serre et **en ce que** l'air riche en oxygène produit dans la serre peut être recyclé dans le bâtiment et/ou **en ce que** les eaux usées du bâtiment peuvent être introduites dans la serre, pour la métabolisation.

**21.** Système selon l'une quelconque des revendications 10 à 20, **caractérisé en ce que** la serre est reliée à un pipeline ou un système de convoyage conduit hors de la serre, par l'intermédiaire duquel la biomasse générée dans la serre peut être évacuée hors de la serre à l'aide d'eau ou d'air ou de bandes de convoyage.

**22.** Système selon l'une quelconque des revendications 10 à 21, **caractérisé en ce que** trois ou quatre ou plusieurs serres sont placées côte à côte, **en ce que** par chaque fois un côté, les serres entourent une cour intérieure commune baignée de lumière et **en ce que** dans la cour intérieure et/ou sur les côtés extérieurs de l'agencement de serres sont placés des éléments réfléchissant la lumière, par exemple des draps blancs ou des éléments réflecteurs qui augmentent l'incidence de lumière effective dans les serres.

**23.** Utilisation de plantes aquatiques pour la réalisation du procédé selon l'une quelconque des revendications 1 à 9 et du système selon l'une quelconque des revendications 10 à 22, du groupe botanique des plantes aquatiques flottantes Lemna (famille des lentilles d'eau) et/ou Eichhornia crassipes (hyacinthes d'eau) et/ou Pistia stratiotes (laitues d'eau) et/ou Hydrocharis morsus ranae (morènes) et/ou Stratiotes aliodes (hydrocharitacées) et/ou Azolla careoliniana (mousse de Java) et/ou Salviania auriculata (salvinie auriculée) et/ou Limnobium lavigatum (grenouillette) et/ou Salviania oblongifolia (salvinie oblongue) et/ou Hygroryza aristata (feuilles à flotteurs) et/ou Trapa natans (mâcre nageante) et/ou Neptunia plena (plantes rizières) et/ou Riccia fluitans (riccies des flots) et/ou Callitriche hermaphroditica (callitriches hermaphrodites) et/ou des mousses aquatiques, à savoir la mousse de Java, la mousse des sources, la mousse lumineuse et/ou des lentilles d'eau naines, à savoir Wolffia, cresson des fontaines et/ou pourpier hivernal et/ou pourpier estival et/ou claytone hivernale et/ou des algues non surnageantes et/ou l'utilisation d'une biomasse animale en ce que dans des contenants d'eau, on a introduit des poissons et/ou des crustacés et/ou des levures et/ou des bactéries et on les a incorporés dans le cycle de substances transformatrices de la serre.

Figur 1

$E1(\Delta W_1) + E2(\Delta W_2) + E3(\Delta p)$ & $CO_2$

Figur 2

A - B

18

19

F1

F2

h2

A

B

h1

Figur 3

13

15

Figur 4

CO₂

W

13

20
23
21
24
20
22

Figur 5

Figur 6

Figur 7

**EP 2 395 829 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005123237 A2
- WO 2008099252 A1
- WO 2007012313 A
- DE 102009008093723